(19)

Europäisches Patentamt

European Patent Office

Office européen des brevets

(11) **EP 4 270 250 A1**

(12) **EUROPEAN PATENT APPLICATION**

(43) Date of publication:
**01.11.2023 Bulletin 2023/44**

(21) Application number: **22212846.4**

(22) Date of filing: **12.12.2022**

(51) International Patent Classification (IPC):
**G06N 3/044** (2023.01)     **G06N 3/065** (2023.01)
**G06N 3/045** (2023.01)     **G06N 3/049** (2023.01)
**G06N 3/084** (2023.01)     **G06N 3/09** (2023.01)

(52) Cooperative Patent Classification (CPC):
**G06N 3/044; G06N 3/045; G06N 3/049;**
**G06N 3/065; G06N 3/09**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.04.2022   IN 202221022826**

(71) Applicant: **Tata Consultancy Services Limited Maharashtra (IN)**

(72) Inventors:
• **BANERJEE, Dighanchal**
 **700160 Kolkata - West Bengal (IN)**

• **MUKHERJEE, Arijit**
 **700160 Kolkata - West Bengal (IN)**
• **DEY, Sounak**
 **700160 Kolkata - West Bengal (IN)**
• **GEORGE, Arun**
 **560066 Bangalore - Karnataka (IN)**
• **PAL, Arpan**
 **700160 Kolkata - West Bengal (IN)**

(74) Representative: **Goddar, Heinz J. et al Boehmert & Boehmert Anwaltspartnerschaft mbB Pettenkoferstrasse 22 80336 München (DE)**

(54) **METHODS AND SYSTEMS FOR TIME-SERIES CLASSIFICATION USING RESERVOIR-BASED SPIKING NEURAL NETWORK**

(57)     The present disclosure relates to methods and systems for time-series classification using a reservoir-based spiking neural network, that can be used at edge computing applications. Conventional reservoir based SNN techniques addressed either by using non-bio-plausible backpropagation-based mechanisms, or by optimizing the network weight parameters. The present disclosure solves the technical problems of TSC, using a reservoir-based spiking neural network. According to the present disclosure, the time-series data is encoded first using a spiking encoder. Then the spiking reservoir is used to extract the spatio-temporal features for the time-series data. Lastly, the extracted spatio-temporal features of the time-series data is used to train a classifier to obtain the time-series classification model that is used to classify the time-series data in real-time, received from edge devices present at the edge computing network.

FIG. 3

EP 4 270 250 A1

**Description**

CROSS-REFERENCE TO RELATED APPLICATIONS AND PRIORITY

The present application claims priority to Indian application no. 202221022826, filed on April 18, 2022.

TECHNICAL FIELD

The disclosure herein generally relates to the field of time-series classification, and, more particularly, to methods and systems for time-series classification using a reservoir-based spiking neural network implemented at edge computing applications.

BACKGROUND

Time series is considered as an ordered sequence of real values - either single numerical or multidimensional vectors, thereby rendering the series univariate or multivariate respectively. Thus, time series classification (TSC) can also be treated as a sequence classification problem.

In other hand, embedding intelligence at the edge computing network has become a critical requirement for many industry domains, especially disaster management, manufacturing, retail, surveillance, remote sensing, etc. Many of the Internet of Things (IoT) applications, such as predictive maintenance in manufacturing industry, need efficient classification of time series data from various sensors together with low-latency real-time response, thus making efficient time series classification (TSC) a prime need. As network reliability is not guaranteed, and data transfer affects the latency as well as power consumption, processing in-situ is an important requirement in the industry.

Many different techniques exist for the TSC, of which, distance measure and nearest neighbour (NN) based clustering techniques such as Weighted Dynamic Time Wrapping (DTW), Derivative DTW etc. are commonly used together for the TSC. Transforming the time series into a new feature space coupled with ensembles of classification techniques (e.g. support vector machine (SVM), k-nearest neighbour (k-NN)) are also used for the same to improve upon the accuracy. Simultaneously, Artificial Neural Networks (ANN) based methods, such as a convolutional neural network (CNN), a multilayer perceptron (MLP), an autoencoder, a recurrent neural network (RNN) etc. for solving TSC problems have also evolved. However, most of the such conventional techniques for the TSC problem are generally computationally intensive, and hence, achieving low-latency real-time response via on-board processing on computationally constrained edge devices remains unrealized. One edge-compatible variant, exists, which is based on adaptive learning.

SUMMARY

Embodiments of the present disclosure present technological improvements as solutions to one or more of the above-mentioned technical problems recognized by the inventors in conventional systems.

In an aspect, there is provided a processor-implemented method for time-series classification using a reservoir-based spiking neural network, the method comprising the steps of: receiving a plurality of training time-series data, wherein each training time-series data of the plurality of training time-series data comprises a plurality of training time-series data values in an ordered sequence; training the reservoir-based spiking neural network with each training time-series data, at a time, of the plurality of training time-series data, to obtain a time-series classification model, wherein the training comprises: passing each training time-series data, to a first spike encoder of the reservoir-based spiking neural network, to obtain encoded spike trains for each training time-series data; passing a time-shifted training time-series data associated with each training time-series data, to a second spike encoder of the reservoir-based spiking neural network, to obtain the encoded spike trains for the time-shifted training time-series data associated with each training time-series data; providing (i) the encoded spike trains for each training time-series data and (ii) the encoded spike trains for the time-shifted training time-series data associated with each training time-series data, to a spiking reservoir of the reservoir-based spiking neural network, to obtain neuronal trace values of a plurality of excitatory neurons for each training time-series data; extracting a plurality of spatio-temporal features for each training time-series data from the neuronal trace values of the plurality of excitatory neurons for each training time-series data; and passing the plurality of spatio-temporal features for each training time-series data, to train a classifier of the reservoir-based spiking neural network, with corresponding class labels, receiving a plurality of input time-series data, wherein each of the plurality of input time-series data comprises a plurality of input time-series data values in the ordered sequence; and passing the plurality of input time-series data to the time-series classification model, to obtain a class label for each of the plurality of input time-series data.

In another aspect, there is provided a system for time-series classification using a reservoir-based spiking neural network, the system comprising: a memory storing instructions; one or more input/output (I/O) interfaces; and one or more hardware processors coupled to the memory via the one or more I/O interfaces, wherein the one or more hardware processors are configured by the instructions to: receive a plurality of training time-series data, wherein each training time-series data of the plurality of training time-series data comprises a plurality of training time-series data values in an ordered sequence; train the reservoir-based spiking neural network with each training time-series data, at a time, of the plurality of training time-series data, to obtain a time-series classification model, wherein the training comprises: passing each training time-series data, to a first spike encoder of the reservoir-based spiking neural network, to obtain an encoded spike trains for each training time-series data; passing a time-shifted training time-series data associated with each training time-series data, to a second spike encoder of the reservoir-based spiking neural network, to obtain the encoded spike trains for the time-shifted training time-series data associated with each training time-series data; providing (i) the encoded spike trains for each training time-series data and (ii) the encoded spike trains for the time-shifted training time-series data associated with each training time-series data, to a spiking reservoir of the reservoir-based spiking neural network, to obtain neuronal trace values of a plurality of excitatory neurons for each training time-series data; extracting a plurality of spatio-temporal features for each training time-series data from the neuronal trace values of the plurality of excitatory neurons for each training time-series data; and passing the plurality of spatio-temporal features for each training time-series data, to train a classifier of the reservoir-based spiking neural network, with corresponding class labels; receive a plurality of input time-series data, wherein each of the plurality of input time-series data comprises a plurality of input time-series data values in the ordered sequence; and pass the plurality of input time-series data to the time-series classification model, to obtain a class label for each of the plurality of input time-series data the input time-series data.

In yet another aspect, there is provided a computer program product comprising a non-transitory computer readable medium having a computer readable program embodied therein, wherein the computer readable program, when executed on a computing device, causes the computing device to: receive a plurality of training time-series data, wherein each training time-series data of the plurality of training time-series data comprises a plurality of training time-series data values in an ordered sequence; train the reservoir-based spiking neural network with each training time-series data, at a time, of the plurality of training time-series data, to obtain a time-series classification model, wherein the training comprises: passing each training time-series data, to a first spike encoder of the reservoir-based spiking neural network, to obtain an encoded spike trains for each training time-series data; passing a time-shifted training time-series data associated with each training time-series data, to a second spike encoder of the reservoir-based spiking neural network, to obtain the encoded spike trains for the time-shifted training time-series data associated with each training time-series data; providing (i) the encoded spike trains for each training time-series data and (ii) the encoded spike trains for the time-shifted training time-series data associated with each training time-series data, to a spiking reservoir of the reservoir-based spiking neural network, to obtain neuronal trace values of a plurality of excitatory neurons for each training time-series data; extracting a plurality of spatio-temporal features for each training time-series data from the neuronal trace values of the plurality of excitatory neurons for each training time-series data; and passing the plurality of spatio-temporal features for each training time-series data, to train a classifier of the reservoir-based spiking neural network, with corresponding class labels; receive a plurality of input time-series data, wherein each of the plurality of input time-series data comprises a plurality of input time-series data values in the ordered sequence; and pass the plurality of input time-series data to the time-series classification model, to obtain a class label for each of the plurality of input time-series data the input time-series data.

In an embodiment, the plurality of training time-series data is received from an edge computing network having one or more edge devices.

In an embodiment, the time-shifted training time-series data associated with each training time-series data, is obtained by shifting the training time-series data with a predefined shifted value.

In an embodiment, the reservoir-based spiking neural network comprises a first spike encoder, a second spike encoder, a spiking reservoir, and a classifier.

In an embodiment, the spiking reservoir is a dual population spike-based reservoir architecture comprising a plurality of excitatory neurons, a plurality of inhibitory neurons, and a plurality of sparse, random, and recurrent connections connecting the plurality of excitatory neurons and the plurality of inhibitory neurons.

It is to be understood that both the foregoing general description and the following detailed description are exemplary and explanatory only and are not restrictive of the embodiments of the present disclosure, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for time-series classification using a reservoir-based spiking neural network, in accordance with some embodiments of the present disclosure.

FIG. 2A and FIG. 2B illustrate exemplary flow diagrams of a processor-implemented method for time-series classification using a reservoir-based spiking neural network, in accordance with some embodiments of the present disclosure.

FIG. 3 is an exemplary block diagram showing an architecture of a reservoir-based spiking neural network, in accordance with some embodiments of the present disclosure.

FIG. 4A through FIG. 4C illustrate exemplary graphical representation of an encoded spike train for an exemplary time-series data value, using a temporal Gaussian encoding technique, in accordance with some embodiments of the present disclosure.

FIG. 5A through FIG. 5D are graphs showing a performance comparison of a rate-based Poisson encoding and a temporal gaussian encoding, on a sample time-series data, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Recent evolution of non-von Neumann neuromorphic systems that collocate computation and data in a manner similar to mammalian brains, coupled with the paradigm of Spiking Neural Networks (SNNs) have shown promise as a candidate for providing effective solutions the time-series classification (TSC) problem. The SNNs, owing to their event based asynchronous processing and sparse data handling, are less computationally intensive compared to other techniques - which make them potential candidates for the TSC problems at edge. Among different network architectures of SNN, reservoirs - a set of randomly and recurrently connected excitatory and inhibitory neurons are found to be most suitable for temporal feature extraction.

However, the conventional reservoir based SNN techniques addressed either by using non-bio-plausible backpropagation based mechanisms, or by optimizing the network weight parameters. Further, the conventional reservoir based SNN techniques are limited and not so accurate in solving the TSC problems. Also, for SNNs to perform efficiently, the input data must be encoded into spike trains which is not much discussed in the conventional techniques and always an area of improvement to obtain an efficient reservoir based time-series classification model for solving the TSC problems at the edge computing network.

The present disclosure herein provides methods and systems for time-series classification using a reservoir-based spiking neural network, to solve the technical problems of TSC at an edge computing network. The disclosed reservoir-based spiking neural network is capable of mimicking brain functionalities in a better fashion and to learn the dynamics of the reservoir using a fixed set of weights thus saving on weight learning. According to an embodiment of the present disclosure, the time-series data is encoded first using a spiking encoder in order to get the maximum possible information which is of utmost importance. Then the spiking reservoir is used to extract the spatio-temporal features for the time-series data. Lastly, the extracted spatio-temporal features of the time-series data is used to train a classifier to obtain the time-series classification model that is used to classify the time-series data in real-time, received from edge devices present at the edge computing network.

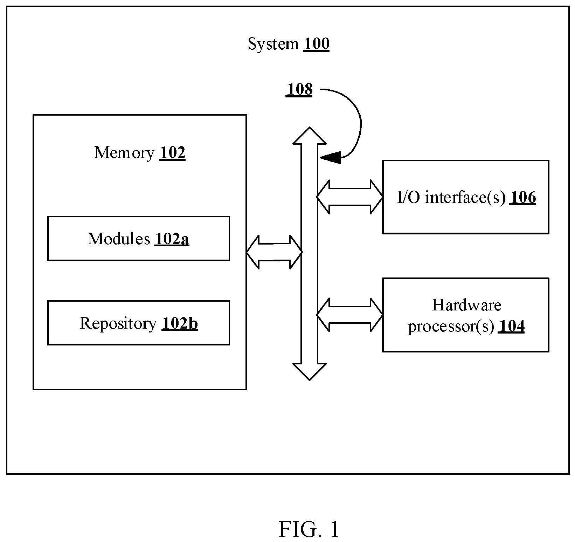

Referring now to the drawings, and more particularly to FIG. 1 through FIG. 5D, where similar reference characters denote corresponding features consistently throughout the figures, there are shown preferred embodiments and these embodiments are described in the context of the following exemplary systems and/or methods.

FIG. 1 is an exemplary block diagram of a system 100 for time-series classification using a reservoir-based spiking neural network, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

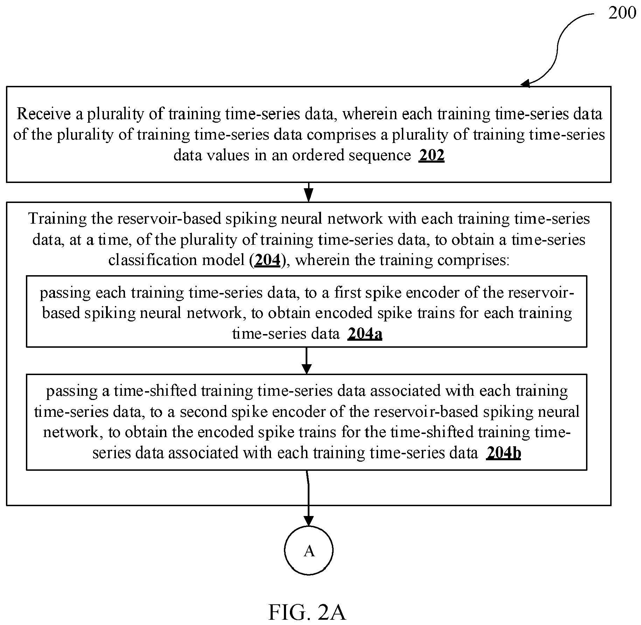

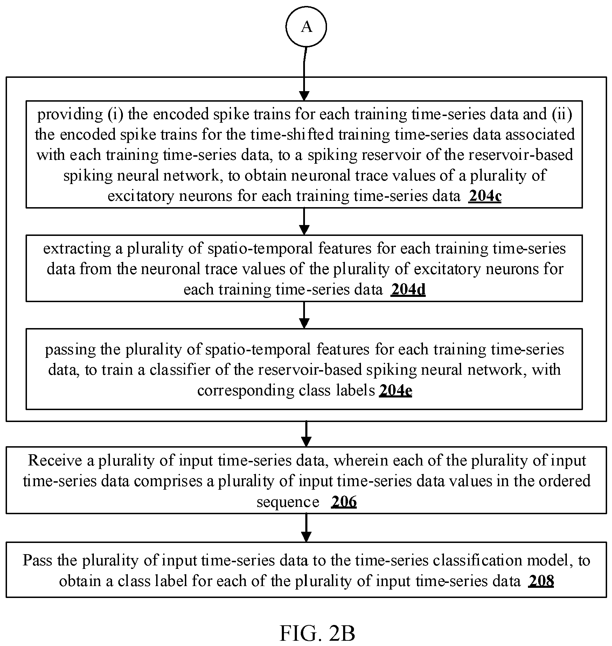

Referring to FIG. 2A and FIG. 2B, components and functionalities of the system 100 are described in accordance with an example embodiment of the present disclosure. For example, FIG. 2A and FIG. 2B illustrate exemplary flow diagrams of a processor-implemented method 200 for time-series classification using a reservoir-based spiking neural network, in accordance with some embodiments of the present disclosure. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more hardware processors 104 of the system 100 are configured to receive a plurality of training time-series data. Each training time-series data of the plurality of training time-series data includes a plurality of training time-series data values. The plurality of training time-series data values of each training time-series data may present in an ordered sequence. The plurality of training time-series data of a fixed length or a varied length.

The plurality of training time-series data is associated with one or more edge devices that are present in an edge computing network. The one or more edge devices include different type of sensors, actuators and so on. One training time-series data or some of the plurality of training time-series data may be received from each edge device. For example, temperature measurement values from a temperature sensor in a given time instance may form one training time-series data. Similarly, the temperature measurement values from the temperature sensor measured in multiple given time instances results in multiple training time-series data, and so on. Hence the plurality of training time-series data values are the real numbers in nature as they are the measurement values.

An exemplary training time-series data is: {2, 6, 34, 69, 78, 113, 283}. The length of the exemplary training time-series data is 7 and 2, 6, 34... are the training time-series data values.

At step 204 of the method 200, the one or more hardware processors 104 of the system 100 are configured to train the reservoir-based spiking neural network with each training time-series data, at a time, of the plurality of training time-series data received at step 202 of the method 200, to obtain a time-series classification model. The obtained time-series classification mode at this step is used for classifying the time-series required.

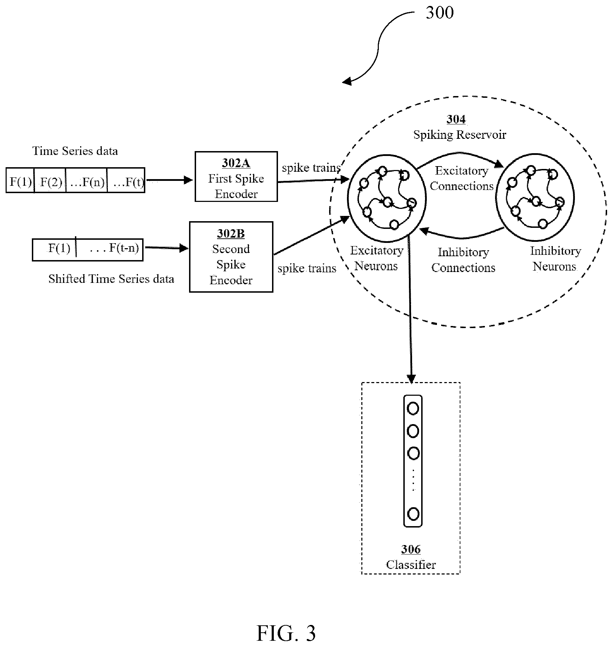

FIG. 3 is an exemplary block diagram showing an architecture of a reservoir-based spiking neural network 300, in accordance with some embodiments of the present disclosure. As shown in FIG. 3, the reservoir-based spiking neural network 300 comprises a first spike encoder 302A, a second spike encoder 302B, a spiking reservoir 304, and a classifier 306. In an embodiment, the spiking reservoir 304 is a dual population spike-based reservoir architecture comprising a plurality of excitatory neurons, a plurality of inhibitory neurons. A plurality of sparse, random, and recurrent connections is present connecting the plurality of excitatory neurons and the plurality of inhibitory neurons. More specifically, the spiking reservoir 304 is a sparse and recurrently connected population of the plurality of excitatory neurons and the plurality of inhibitory neurons, where each neuron is connected to a set of other neurons in the same population in a probabilistic fashion such that resulting dynamics of the network remains stable and does not go into chaotic regime. The sparse and recurrently connected population is capable of extracting spatio-temporal features better than the other spiking network architecture.

The paradigm of the spiking reservoir 304 of the present disclosure may be evolved with two different types based on the nature of neurons. The first type is (i) Echo State Networks (ESN) where rate-based neurons and continuous activation functions are used. The second type is (ii) Liquid State Machines (LSM) where spiking neurons with asynchronous threshold activation function is used. The Liquid State Machines (LSM) are found to be efficient for tasks involving spatio temporal feature extraction such as gesture recognition, time series prediction etc. when used with proper spike encoding techniques.

In the context of the present disclosure, the spiking reservoir architecture 304 includes a number of excitatory neurons $N_{ex}$, a number of inhibitory neurons $N_{inhi}$, and a number of recurrent connections $N_{rec}$. The sparse random connections between input features and the LSM are controlled by their **out - degree** parameter denoted by $Input_{out-degree}$. All these are tunable parameters and can be adjusted to improve the dynamics of the spiking reservoir 304 to achieve better performance. Finally, a set of weight scalar values are tuned and fixed for the inter-population network connections (such as input-to-excitatory, excitatory-to-input, inhibitory-to- excitatory, inihibitory-to-inihibitory, time-shifted input-to-excitatory) in order to bring in stability and better performance.

Also, in the context of the present disclosure, a Leaky-Integrate and Fire (LIF) neuron model is used which can be described by equation 1, as it is computationally easier to simulate and work with.

$$\tau_m \frac{dV}{dt} = (V_{rest} - V) + IR$$

$$s = \begin{cases} 1, V \geq V_{thresh} \\ 0, V < V_{thresh} \end{cases} \text{--------------------------- (1)}$$

wherein, **V** is the neuron membrane potential that varies with the input stimuli and when it crosses a threshold, $V_{thresh}$, the neuron emits a spike **s.** $V_{rest}$ is the resting membrane potential, **I** represents the total input current to the neuron from all its synapses. **R** is the total resistance encountered by **I** during synaptic transmission. Without any input, **V** exponentially decays with a time constant $\tau_m$. Since equation 1 is a continuous equation, the Euler method is used to obtain a discretized form of equation 1 for simulation purpose. Final vectorized form of the equations for a layer of LIF neurons is as described by a set of equations 2:

$$U(t) = V(t - 1) + W^T s_{in}(t)$$

$$s(t) = \mathcal{H}(U(t) - V_{thresh}) \text{---------------- (2)}$$

$$V(t) = \alpha \, U(t) \odot (i - s(t)) + (V_{rest} \odot s(t))$$

wherein $V(t)$ represents the membrane potential vectors of the LIF neurons at time **t** and $U(t)$ is an intermediate potential vector. Incoming input term **IR** in the equation 1 is modelled as the dot product of synaptic weights **W** and the incoming input spike vector $s_{in}(t)$. **s(t)** represents the output spiking activity of the LIF neurons which is calculated as the Heaviside Step function ($\mathcal{H}$) of the difference between **U(t)** and the threshold $V_{thresh}$. The membrane potential at time **t** decays with a constant decay factor of $\alpha$ which is approximated by $e^{\frac{-1}{\tau_m}}$. While **i** is a vector comprising of all ones, and $\odot$ represents the Hadamard product.

The training process of the reservoir-based spiking neural network 300 with each training time-series data is explained in detail through steps 204a to 204e. At step 204a, each training time-series data, is passed to the first spike encoder 302A of the reservoir-based spiking neural network 300, to obtain encoded spike trains for each training time-series data. The encoded spike trains include an encoded spike train for each of the plurality of training time-series data values present in the training time-series data. In an embodiment, each training time-series data value of the plurality of training time-series data values is passed to the first spike encoder 302A to obtain the corresponding encoded spike train and then the encoded spike trains are formed using the encoded spike train for each of the plurality of training time-series data values present in the training time-series data.

More technically, the first spike encoder 302A converts the plurality of training time-series data values (real-valued) present in each training time-series data **F(t)**, into representative spike trains so as to retain the maximum possible information, is of utmost importance for the reservoir-based spiking neural network 300 to perform efficiently.

In an embodiment, the first spike encoder 302A employs one of the encoding technique chosen from the group including but not limited to a rate encoding technique and a temporal encoding technique. The rate encoding technique encodes the information in terms of the number (or rate) of firing, called as spikes of a neuron. The temporal encoding technique encodes the information based on the temporal distance between spikes.

In an embodiment, a rate-based Poisson encoding is one of the variant of the rate encoding technique which makes use of the Poisson distribution model, where the probability of observing exactly **n** spikes within a time interval $(t_1, t_2)$ is given by:

$$P\left(n \; spikes \; during \; (t_{1,} \, t_2)\right) = e^{(<n>)} \frac{|<n>|^n}{n!} \; \text{----------------} \; (3)$$

Where the average spike count < n > is expressed as:

$$< n > = \int_{t_{1,}}^{t_2} r(t) dt \; \text{----------------} \; (4)$$

**r(t)** being the instantaneous firing rate. By slow varying **r(t)** in small time sub-interval $\delta(t)$, it can be assumed equivalent to discrete rate value **r[i]**. With the approximation of a Poisson process by infinitely many Bernoulli trails and each Bernoulli trail by a uniform draw **x[i]** at each time step *i*, a spike **T[i]** can be denoted as = 1, if **x[i]** < **r[i]**$\delta(t)$, and **T[i]** can be denoted as = 0, if **x[i]** $\geq$ **r[i]**$\delta(t)$. The spike trains obtained from Poisson encoding are heavily depends on the range of *r(t)* and often need proper scaling in order to induce neural firing for most of the values in the input range.

In another embodiment, a temporal gaussian encoding is one of the variant of the temporal encoding technique based on Gaussian model. If **y(t)** is a variable denoting the value of a time-series at time *t*, and if $y_{min}$ and $y_{max}$ are the theoretical upper and lower bounds of **y(t)**, then **m** neurons can be used to generate **m** intervals (receptive fields) between the range $y_{min}$ and $y_{max}$ For the $i^{th}$ encoding neuron **(1 $\leq$ i $\leq$ m)**, the centre of its receptive field is aligned with a Gaussian centered at:

$$\mu_i = y_{min} + (i-1)\frac{(y_{max}-y_{min})}{(m-2)} \; \text{----------------------------} \; (5)$$

With a deviation of:

$$\sigma = \gamma \frac{(y_{max}-y_{min})}{(m-2)} \; \text{----------------------------------------------------------} \; (6)$$

where $\gamma$ is a scaling term used for controlling width of the distribution. This essentially divides the entire input space into m overlapping spatial regions, each attuned to an encoding neuron whose probability of firing a spike is given by the corresponding Gaussian. Each value of $y(t)$ is projected onto the Gaussians to get individual probabilities **P($i^{th}$ neuron spiking|y(t))**.

To obtain the spike train, the individual probabilities are distributed over the time interval $(t_1, t_2)$. In this, any probability distribution is used, but for simplicity, the probability of spiking is uniformly distributed between time interval $(t_1, t_2)$, and thus dividing the time interval $(t_1, t_2)$ into m individual timesteps of length $\frac{(t_2 - t_1)}{m}$. The probability **P($i^{th}$ neuron spiking at $j^{th}$ timestep)** will depend on the distance between **P($i^{th}$ neuron spiking|y(t))** and the maximum probability by which $i^{th}$ neuron can spike, **Max [P($i^{th}$ neuron spiking)]**. Since, the receptive fields of the encoding neurons are modelled after the Gaussian distribution, this maximum probability coincides with the probability obtained by projection of mean of the distribution, **P($\mu_i$)**. If **P($i^{th}$ neuron spiking|y(t))** is very high and close to **P($\mu_i$)**, then firing of the $i^{th}$ neuron is almost instantaneous. Similarly, If **P($i^{th}$ neuron spiking|y(t))** moves away from the **P($\mu_i$)**, then its firing is delayed. As such the probability range **[ P$_{thresh}$, P($\mu_i$)]** is divided into m probability thresholds such that the $i^{th}$ neuron spikes at a time where **P($i^{th}$ neuron spiking|y(t))** can cross the associated maximum threshold. Using this concept, each value of **y(t)** is encoded into m different spike trains of length m time-steps generated by the corresponding neurons. **P$_{thresh}$** is tunable encoding hyper-parameter dictating the minimum limit of probability for spiking of an individual neuron. The precision of encoding is dependent on the number of encoding neurons which is also a tunable hyper-parameter.

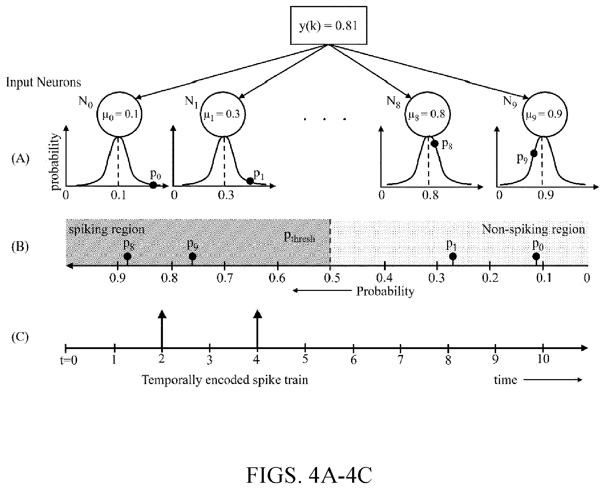

FIG. 4A through FIG. 4C illustrate exemplary graphical representation of an encoded spike train for an exemplary time-series data value, using the temporal Gaussian encoding technique, in accordance with some embodiments of the present disclosure. As shown in FIG. 4A through FIG. 4C, the exemplary time-series data value, **Y(k) = 0.81**, with 10 neurons **($N_0, N_1, ..., N_9$)** each having different receptive fields (tagged with corresponding $\mu$ values) with values between 0 and 1, is considered. FIG. 4A shows the projection of the value 0.81 on different Gaussians and FIG. 4B shows that the corresponding projected probabilities for two neurons, **$N_8$** and **$N_9$** have crossed the predetermined threshold **P$_{thresh}$**= 0.5, and that for the other two neurons, **$N_0$** and **$N_1$** have not. This signifies that neurons **$N_8$** and **$N_9$** are in the spiking region while **$N_0$** and **$N_1$** are not. Neuron **$N_8$** having higher probability value than neuron **$N_9$** and will spike earlier. The encoded spike train generated by all 10 neurons are shown together in FIG. 4C.

At step 204b, a time-shifted training time-series data associated with each training time-series data, is passed to a second spike encoder 302B of the reservoir-based spiking neural network 300. The encoded spike trains for the time-shifted training time-series data associated with each training time-series data, is obtained from the second spike encoder 302B. The time-shifted training time-series data associated with each training time-series data, is obtained by shifting the training time-series data with a predefined shifted value.

The time-shifted training time-series data **F($t$ - n)** for the training time-series data **F($t$)** is calculated. Wherein **n** is the tunable parameter called as a predefined shifted value. Based on the predefined shifted value **n,** the time-shifted training time-series data **F($t$ - n)** is obtained. For example, the predefined shifted value n may range between 5 and 10.

In an embodiment, the second spike encoder 302B employs one of the encoding technique chosen from the group including but not limited to the rate encoding technique and the temporal encoding technique, as specified at step 204a. However, in one embodiment, the first spike encoder 302A and the second spike encoder 302B may be same. For example, if the first spike encoder 302A employs the rate encoding technique, then the second spike encoder 302B also employs the rate encoding technique. In another embodiment, the first spike encoder 302A and the second spike encoder 302B may be different. For example, if the first spike encoder 302A employs the rate encoding technique, then the second spike encoder 302B also employs the temporal encoding technique, or vice versa, and so on.

At step 204c, (i) the encoded spike trains for each training time-series data **F($t$)** obtained at step 204a, and (ii) the encoded spike trains for the time-shifted training time-series data **F($t$ - n)** associated with the corresponding training time-series data obtained at step 204b, to the spiking reservoir 304 of the reservoir-based spiking neural network 300, to obtain neuronal trace values of the plurality of excitatory neurons for each training time-series data.

The encoded spike trains for the time-shifted training time-series data **F($t$ - n)** is passed to the spiking reservoir 304 so that the activity of the spiking reservoir 304 always remain above an acceptable threshold, and to avoid diminishing of the spiking activities of the spiking reservoir 304, at times, and thereby to avoid hampering of the performance of the spiking reservoir 304. The encoded spike trains of the training time-series data **F($t$)** and the time-shifted training time-series data **F($t$ - n),** are fed into the spiking reservoir 304 through the plurality of sparse and random connections or synapses.

The neuronal trace value or simply a neuronal trace is a state variable that captures the dynamics of spike activity of the neuron, as explained in equations 5 and 6. Upon emission of the neuronal spike, this neuronal trace value is updated with a constant C (= 1) and acts as a simple working memory. **$x_{trace}$** represents the trace value of the neuron which exhibits an exponential decay with the rate being controlled by decay factor $\beta$ as shown in the equation 7:

$$x_{trace}(t) = \beta\, x_{trace}(t-1) + Cs(t) \text{ -------------------------- (7)}$$

At step 204d, a plurality of spatio-temporal features for each training time-series data are extracted from the neuronal trace values of the plurality of excitatory neurons for each training time-series data received at step 204c. The sparse input and recurrent weights with directed cycles act as a non-linear random projection of the input feature space to a high dimensional spatio-temporal embedding space, where implicit temporal features become explicit. These embeddings are captured from the neuronal traces of the spiking reservoir neurons.

At step 204e, the plurality of spatio-temporal features for each training time-series data, is passed to train the classifier 306 of the reservoir-based spiking neural network 300, with corresponding class labels to obtain the time-series classification model.

Usually, a single layer of readout weights from the spiking reservoir are trained using an appropriate learning rule for tasks like classification, prediction etc. But in the present disclosure, the plurality of spatio-temporal features for each training time-series data are fed to the classifier 306 for the training. In an embodiment, the classifier 306 may be selected from a group of machine learning (ML) classification models such as a Logistic Regression model, a Support Vector Machine (SVM), a Decision Trees, a K- Nearest Neighbor (K-NN) algorithm, and so on, based on the type of application. For the time-series classification, a Logistic Regression based classifier is used and is trained with corresponding class labels. The corresponding class labels of each training time-series data denoted the labeled value or the annotation. Once training is done, the trained model is validated with the neuronal trace values corresponding to validation data having a plurality of validation time-series data to check the accuracy of the model and the trained model having the best accuracy is considered as the time-series classification model. The obtained time-series classification model is used for classifying the time-series data in testing times.

At step 206 of the method 200, the one or more hardware processors 104 of the system 100 are configured to receive a plurality of input time-series data for the testing. Each of the plurality of input time-series data comprises a plurality of input time-series data values in the ordered sequence. The plurality of input time-series data of the fixed length or the varied length.

The plurality of input time-series data is associated with one or more edge devices that are present in an edge computing network and but in real-time and so as to check the performance or detecting faults of the edge devices and the edge computing network. The one or more edge devices include different type of sensors, actuators and so on, as explained in step 202 of the method 200.

At step 208 of the method 200, the one or more hardware processors 104 of the system 100 are configured to pass the plurality of input time-series data to the time-series classification model, to obtain a class label for each of the plurality of input time-series data. The class label is one of the class labels that are used while training the spiking neural network 300. Based on the obtained class label for each input time-series data, the performance or detecting faults of the edge devices and the edge computing network are monitored accurately and efficiently on the edge computing network without additional resources.

Thus, the time-series classification model obtained from the reservoir based spiking neural network 300 is efficient, accurate and can effectively installed at edge computing network for time-series classification in various applications especially for predictive maintaince. The present disclosure can be used for many industry domains, especially disaster management, manufacturing, retail, surveillance, remote sensing, and so on.

Example scenario:

A. Dataset, Implementation and Setup

In predictive maintenance, real-time classification of vibration data from heavy machinery or structures such as boilers, bridges, conveyors, car engines etc. is critical for quick detection of faults. Small battery-powered sensors are used to detect the vibration and insofar, final analyses are performed on remote computing infrastructure, i.e. cloud. In many scenarios however, the continuous connectivity necessary for low-latency real-time analysis may not be a reality, and there is an urgent need for on-board processing on the devices themselves. The present disclosure with the reservoir based spiking neural network architecture is evaluated using four such vibration time series, carefully selected from the UCR repository, namely:

- Ford A - Engine noise dataset with 3601 data points, used to detect any automotive disorder,
- Ford B - Engine noise dataset with 3636 data points collected in operating conditions and test data collected with noise contamination,

- Wafer - Inline process control measurements recorded via various sensors during the processing of silicon wafers with two classes (normal and abnormal) with 1000 data points, and,
- Earthquakes - Seismic vibration dataset collected by Northern California Earthquake Data Center between 1967 and 2003 with 322 data points.

The reservoir based spiking neural network architecture of the present disclosure is implemented using BindsNet 0.2.7, a GPU-based open-source SNN simulator in Python that supports parallel computing. The parameter values for the LIF neuron (refer to equation 1) used in the experiments are:, $V_{thresh}$ = -52.0 mV, $V_{rest}$ = -65.0 mV. Table 1 shows other important network parameters for the spiking reservoir of the present disclosure. For the Gaussian encoding, 15 input encoding neurons (i.e. m = 15) are used, resulting in 15x magnification of the input timescale to spike time scale. A set of weight scalar parameters are selected for different connections between the populations to optimize the spiking reservoir performance.

Table 1

| | Parameters | | | | | |
|---|---|---|---|---|---|---|
| Dataset name | Nex | Ninhi | Inputout-degree | $\tau m$ | Num Encoder | Weight Scalar |
| Ford A | 2000 | 500 | 500 | 25 | 15 | (2.0, 1.6, 0.9, 0.6, 1.4) |
| Ford B | 2000 | 500 | 300 | 35 | 15 | (2.0, 1.3, 0.7, 0.4, 1.7) |
| Wafer | 4000 | 1000 | 500 | 25 | 15 | (2.0, 0.8, 1.2, 0.2, 0.9) |
| Earthquakes | 4000 | 500 | 300 | 25 | 15 | (2.0, 1.1, 0.3, 0.2, 1.9) |

B. Results and Discussion

The classification accuracy of the time-series classification of the present disclosure is compared with the state-of-the-art techniques namely: (i) UCR website, (ii) a multilayered RNN based TimeNet-C (TN-C), and, (iii) Instant Adaptive Learning (IAL) based TSC (IAL-Edge).

Table 2 shows a comparison of the classification accuracy of the present disclosure with the with the state-of-the-art techniques, using the Poisson Rate Encoding (PRE) and Gaussian Temporal Encoding (GTE) schemes respectively. As shown in table 2, the present disclosure performs better with temporal spike encoding scheme compared to rate encoding. Moreover, the present disclosed spiking neural network (with temporal encoding) outperforms IAL-Edge for all the datasets except Earthquakes, while being almost at par with TN-C. Poor performance for Earthquakes dataset may be rooted into lesser activity of reservoir (and thus poor learning of features) due to the small number of training samples. Higher accuracy values reported in UCR website are outcome of methods that are not fit for edge computing applications.

Table 2

| | Classification accuracy (%) | | | | |
|---|---|---|---|---|---|
| | State-of-the-art | | | Present disclosure | |
| Dataset name | UCR website | TN-C | IAL-Edge | PRE | GTE |
| Ford A | 87 | 78.1 | 80.31 | 71.7 | 80.37 |
| Ford B | 78 | 73.7 | 64 | 56.2 | 64.32 |
| Wafer | 99 | 99.5 | 95.47 | 85.7 | 98.85 |
| Earthquakes | 74 | 76.7 | 81.98 | 67 | 71.94 |

Comparison of the rate-based Poisson encoding and the temporal gaussian encoding:

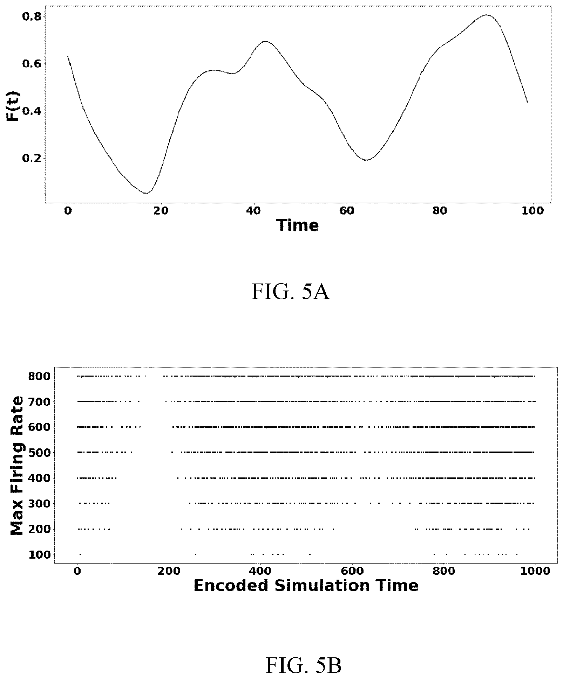

The comparison and the performance of the rate-based Poisson encoding and the temporal gaussian encoding is evaluated on a sample time-series data (short random snap) $F(t)$ taken from the Mackey Glass timeseries. FIG. 5A through FIG. 5D are graphs showing a performance comparison of a rate-based Poisson encoding and a temporal gaussian encoding, on a sample time-series data, in accordance with some embodiments of the present disclosure.

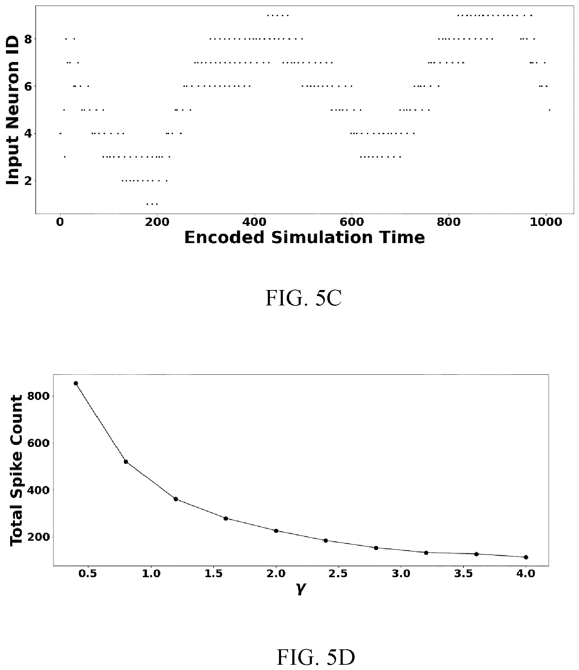

FIG. 5A is a graph showing the sample time-series data $F(t)$. For the rate-based Poisson encoding the sample time-series data $F(t)$ is considered as the rate function $r(t)$. FIG. 5B is a graph showing the encoded spike train for the maximum value of $r(t)$ obtained after applying appropriate scaling, using the rate-based Poisson encoding. FIG. 5C is a graph showing the encoded spike train obtained using the temporal gaussian encoding with 10 neurons (i.e., $m$ = 10). In case of the rate-based Poisson encoding, despite applying higher scaling factor on $r(t)$, the encoding neuron fails to spike at low values of $F(t)$, as a result of which the encoded spike train loses some information. This loss of information affects the performance of the subsequent spiking network. On the other hand, the encoded spike trains of the temporal gaussian encoding clearly shows that the generated spike trains have almost captured the entire temporal signature of $F(t)$ as each of the 10 individual neurons cater to a separate range of input values.

The power consumption of the spiking neural network (SNN) running on a neuromorphic hardware depends on the number of synaptic operation (SOP) performed. The SOP, in turn depends on the total number of spikes in the input spike train (encoded spike train) of the SNN. For the sample time-series data $F(t)$, the total spike count for the temporal gaussian encoding is around 227 for all 10 neurons (with $\gamma$ = 2.0) while that for the rate-based Poisson encoding (for a single neuron), it ranges between 18 to 409 depending on the range of $F(t)$. For lower values of $F(t)$, the encoded spike train in the rate-based Poisson encoding is sparse compared to that of the temporal gaussian encoding, but at the same time, it is also lossy in terms of information content. FIG. 5D is a graph showing the spike count for 10 neurons increases with decreasing values of $\gamma$ for the temporal gaussian encoding. However, setting $\gamma$ in the range [1.5, 2.5] keeps the total number of spikes in the range of [280, 180] which provides acceptable performance for the SNN. Thus, the temporal gaussian encoding seems to be more efficient than the rate-based Poisson encoding with respect to sparsity and information content of the encoded spike train.

The time-series classification model of the present disclosure obtained from the reservoir based spiking neural network is efficient, accurate and can effectively installed at edge computing network for time-series classification in various applications. The experimental results also prove that the present disclosure outperforms the state-of-the-art techniques and can be effectively installed at edge computing network for solving the TSC problems without any additional resources.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims (when included in the specification), the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

**Claims**

1. A processor-implemented method (200) for time-series classification using a reservoir-based spiking neural network, the method comprising the steps of:

   receiving, via one or more hardware processors, a plurality of training time-series data, wherein each training time-series data of the plurality of training time-series data comprises a plurality of training time-series data values in an ordered sequence (202); and

   training, via the one or more hardware processors, the reservoir-based spiking neural network with each training time-series data, at a time, of the plurality of training time-series data, to obtain a time-series classification model (204), wherein the training comprises:

   passing each training time-series data, to a first spike encoder of the reservoir-based spiking neural network, to obtain encoded spike trains for each training time-series data (204a);

   passing a time-shifted training time-series data associated with each training time-series data, to a second spike encoder of the reservoir-based spiking neural network, to obtain the encoded spike trains for the time-shifted training time-series data associated with each training time-series data (204b);

   providing (i) the encoded spike trains for each training time-series data and (ii) the encoded spike trains for the time-shifted training time-series data associated with each training time-series data, to a spiking reservoir of the reservoir-based spiking neural network, to obtain neuronal trace values of a plurality of excitatory neurons for each training time-series data (204c);

   extracting a plurality of spatio-temporal features for each training time-series data from the neuronal trace values of the plurality of excitatory neurons for each training time-series data (204d); and

   passing the plurality of spatio-temporal features for each training time-series data, to train a classifier of the reservoir-based spiking neural network, with corresponding class labels (204e).

2. The method of claim 1, further comprising:

   receiving, via the one or more hardware processors, a plurality of input time-series data, wherein each of the plurality of input time-series data comprises a plurality of input time-series data values in the ordered sequence (206); and

   passing, via the one or more hardware processors, the plurality of input time-series data to the time-series classification model, to obtain a class label for each of the plurality of input time-series data (208).

3. The method of claim 1, wherein the plurality of training time-series data is received from an edge computing network having one or more edge devices.

4. The method of claim 1, wherein the time-shifted training time-series data associated with each training time-series data, is obtained by shifting the training time-series data with a predefined shifted value.

5. The method of claim 1, wherein the reservoir-based spiking neural network comprises a first spike encoder, a second spike encoder, a spiking reservoir, and a classifier.

6. The method of claim 5, wherein the spiking reservoir is a dual population spike-based reservoir architecture comprising a plurality of excitatory neurons, a plurality of inhibitory neurons, and a plurality of sparse, random, and recurrent connections connecting the plurality of excitatory neurons and the plurality of inhibitory neurons.

7. A system (100) for time-series classification using a reservoir-based spiking neural network, the system comprising:

a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:

receive a plurality of training time-series data, wherein each training time-series data of the plurality of training time-series data comprises a plurality of training time-series data values in an ordered sequence; and
train the reservoir-based spiking neural network with each training time-series data, at a time, of the plurality of training time-series data, to obtain a time-series classification model, wherein the training comprises:

passing each training time-series data, to a first spike encoder of the reservoir-based spiking neural network, to obtain an encoded spike trains for each training time-series data;
passing a time-shifted training time-series data associated with each training time-series data, to a second spike encoder of the reservoir-based spiking neural network, to obtain the encoded spike trains for the time-shifted training time-series data associated with each training time-series data;
providing (i) the encoded spike trains for each training time-series data and (ii) the encoded spike trains for the time-shifted training time-series data associated with each training time-series data, to a spiking reservoir of the reservoir-based spiking neural network, to obtain neuronal trace values of a plurality of excitatory neurons for each training time-series data;
extracting a plurality of spatio-temporal features for each training time-series data from the neuronal trace values of the plurality of excitatory neurons for each training time-series data; and
passing the plurality of spatio-temporal features for each training time-series data, to train a classifier of the reservoir-based spiking neural network, with corresponding class labels.

8. The system of claim 7, wherein the one or more hardware processors (104) are further configured by the instructions to:

receive a plurality of input time-series data, wherein each of the plurality of input time-series data comprises a plurality of input time-series data values in the ordered sequence; and
pass the plurality of input time-series data to the time-series classification model, to obtain a class label for each of the plurality of input time-series data the input time-series data.

9. The system of claim 7, wherein the plurality of training time-series data is received from an edge computing network having one or more edge devices.

10. The system of claim 7, wherein the time-shifted training time-series data associated with each training time-series data, is obtained by shifting the training time-series data with a predefined shifted value.

11. The system of claim 7, wherein the reservoir-based spiking neural network comprises a first spike encoder, a second spike encoder, a spiking reservoir, and a classifier.

12. The system of claim 11, wherein the spiking reservoir is a dual population spike-based reservoir architecture comprising a plurality of excitatory neurons, a plurality of inhibitory neurons, and a plurality of sparse, random, and recurrent connections connecting the plurality of excitatory neurons and the plurality of inhibitory neurons.

13. One or more non-transitory machine-readable information storage mediums comprising one or more instructions which when executed by one or more hardware processors cause:

receiving, a plurality of training time-series data, wherein each training time-series data of the plurality of training time-series data comprises a plurality of training time-series data values in an ordered sequence; and
training, the reservoir-based spiking neural network with each training time-series data, at a time, of the plurality of training time-series data, to obtain a time-series classification model, wherein the training comprises:

passing each training time-series data, to a first spike encoder of the reservoir-based spiking neural network, to obtain encoded spike trains for each training time-series data;
passing a time-shifted training time-series data associated with each training time-series data, to a second spike encoder of the reservoir-based spiking neural network, to obtain the encoded spike trains for the time-shifted training time-series data associated with each training time-series data ;

providing (i) the encoded spike trains for each training time-series data and (ii) the encoded spike trains for the time-shifted training time-series data associated with each training time-series data, to a spiking reservoir of the reservoir-based spiking neural network, to obtain neuronal trace values of a plurality of excitatory neurons for each training time-series data;

extracting a plurality of spatio-temporal features for each training time-series data from the neuronal trace values of the plurality of excitatory neurons for each training time-series data; and

passing the plurality of spatio-temporal features for each training time-series data, to train a classifier of the reservoir-based spiking neural network, with corresponding class labels .

14. The one or more non-transitory machine-readable information storage mediums of claim 13, wherein the one or more instructions which when executed by the one or more hardware processors further cause:

receiving, a plurality of input time-series data, wherein each of the plurality of input time-series data comprises a plurality of input time-series data values in the ordered sequence; and

passing, the plurality of input time-series data to the time-series classification model, to obtain a class label for each of the plurality of input time-series data.

System **100**

**108**

Memory **102**

Modules **102a**

Repository **102b**

I/O interface(s) **106**

Hardware
processor(s) **104**

FIG. 1

200

Receive a plurality of training time-series data, wherein each training time-series data of the plurality of training time-series data comprises a plurality of training time-series data values in an ordered sequence **202**

Training the reservoir-based spiking neural network with each training time-series data, at a time, of the plurality of training time-series data, to obtain a time-series classification model (**204**), wherein the training comprises:

passing each training time-series data, to a first spike encoder of the reservoir-based spiking neural network, to obtain encoded spike trains for each training time-series data **204a**

passing a time-shifted training time-series data associated with each training time-series data, to a second spike encoder of the reservoir-based spiking neural network, to obtain the encoded spike trains for the time-shifted training time-series data associated with each training time-series data **204b**

A

FIG. 2A

(A)

providing (i) the encoded spike trains for each training time-series data and (ii) the encoded spike trains for the time-shifted training time-series data associated with each training time-series data, to a spiking reservoir of the reservoir-based spiking neural network, to obtain neuronal trace values of a plurality of excitatory neurons for each training time-series data **204c**

extracting a plurality of spatio-temporal features for each training time-series data from the neuronal trace values of the plurality of excitatory neurons for each training time-series data **204d**

passing the plurality of spatio-temporal features for each training time-series data, to train a classifier of the reservoir-based spiking neural network, with corresponding class labels **204e**

Receive a plurality of input time-series data, wherein each of the plurality of input time-series data comprises a plurality of input time-series data values in the ordered sequence **206**

Pass the plurality of input time-series data to the time-series classification model, to obtain a class label for each of the plurality of input time-series data **208**

FIG. 2B

FIG. 3

FIGS. 4A-4C

FIG. 5A

FIG. 5B

FIG. 5C

FIG. 5D

EUROPEAN SEARCH REPORT

Europäisches Patentamt
European Patent Office
Office européen des brevets

**Application Number**

EP 22 21 2846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BANERJEE DIGHANCHAL DIGHANCHAL B@TCS COM ET AL: "Efficient Optimized Spike Encoding of Multivariate Time-series", 2022 7TH INTERNATIONAL CONFERENCE ON INTELLIGENT INFORMATION TECHNOLOGY, ACMPUB27, NEW YORK, NY, USA, 28 March 2022 (2022-03-28), pages 22-28, XP058853906, DOI: 10.1145/3517343.3517349 ISBN: 978-1-4503-9658-5 * page 22, right-hand column, paragraph 1 * * page 23, left-hand column, paragraph 1 - right-hand column, paragraph 4 * * page 25, left-hand column, paragraph 1 - right-hand column, paragraph 1 * * page 24, left-hand column, last paragraph - right-hand column, paragraph 2 * * page 25; figure 1 * * page 25, left-hand column, paragraph 1 - right-hand column, paragraph 3 * * page 25, left-hand column, paragraph 3 * * page 26; table 1 * ----- | 1-14 | INV. G06N3/044 G06N3/065 G06N3/045 G06N3/049 G06N3/084 G06N3/09 |
| A | AMIRHOSSEIN TAVANAEI ET AL: "Deep Learning in Spiking Neural Networks", ARXIV.ORG, CORNELL UNIVERSITY LIBRARY, 201 OLIN LIBRARY CORNELL UNIVERSITY ITHACA, NY 14853, 22 April 2018 (2018-04-22), XP081014897, DOI: 10.1016/J.NEUNET.2018.12.002 * page 14, left-hand column, paragraph 2 - right-hand column, last paragraph * ----- -/-- | 1-14 | TECHNICAL FIELDS SEARCHED (IPC) G06N |

The present search report has been drawn up for all claims

| Place of search | Date of completion of the search | Examiner |
|---|---|---|
| Munich | 20 September 2023 | Herri, Edmond |

EPO FORM 1503 03.82 (P04C01)

page 1 of 2

Europäisches
Patentamt

European
Patent Office

Office européen
des brevets

## EUROPEAN SEARCH REPORT

Application Number

EP 22 21 2846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | DEY SOUNAK ET AL: "Efficient Time Series Classification using Spiking Reservoir", 2022 INTERNATIONAL JOINT CONFERENCE ON NEURAL NETWORKS (IJCNN), IEEE, 18 July 2022 (2022-07-18), pages 1-8, XP034199568, DOI: 10.1109/IJCNN55064.2022.9892728 [retrieved on 2022-09-30] * page 2, right-hand column, paragraph 4 – paragraph 5; figure 1 * * page 4, left-hand column, paragraph 3 – page 5, left-hand column, paragraph 3 * ----- | 1-14 | |

TECHNICAL FIELDS
SEARCHED      (IPC)

The present search report has been drawn up for all claims

| Place of search | Date of completion of the search | Examiner |
|---|---|---|
| Munich | 20 September 2023 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

• IN 202221022826